(19) Europäisches Patentamt
European Patent Office
Office européen des brevets

(11) **EP 3 626 798 A1**

(12) **EUROPEAN PATENT APPLICATION**
published in accordance with Art. 153(4) EPC

(43) Date of publication:
**25.03.2020 Bulletin 2020/13**

(51) Int Cl.:
***C09K 5/04*** *(2006.01)*

(21) Application number: **18802092.9**

(22) Date of filing: **15.05.2018**

(86) International application number:
**PCT/JP2018/018819**

(87) International publication number:
**WO 2018/212204 (22.11.2018 Gazette 2018/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.05.2017 JP 2017100259**

(71) Applicant: **Daikin Industries, Ltd.**
**Osaka-shi, Osaka 530-8323 (JP)**

(72) Inventors:
• **ITANO, Mitsushi**
**Osaka-shi**
**Osaka 530-8323 (JP)**

• **OHKUBO, Shun**
**Osaka-shi**
**Osaka 530-8323 (JP)**
• **KUROKI, Hitomi**
**Osaka-shi**
**Osaka 530-8323 (JP)**
• **TSUCHIYA, Tatsumi**
**Osaka-shi**
**Osaka 530-8323 (JP)**
• **GOBOU, Kenji**
**Osaka-shi**
**Osaka 530-8323 (JP)**

(74) Representative: **Hoffmann Eitle**
**Patent- und Rechtsanwälte PartmbB**
**Arabellastraße 30**
**81925 München (DE)**

(54) **REFRIGERANT-CONTAINING COMPOSITION, USE THEREOF, COOLING METHOD USING SAME, AND REFRIGERATOR COMPRISING SAME**

(57) Provided is an alternative mixed refrigerant that has an acceptable concentration (OEL) of 400 ppm or more based on the entire composition, as calculated with the OEL of R1234yf as 200 ppm. A solution is to provide a composition containing a refrigerant that contains difluoromethane (R32), 2,3,3,3-tetrafluoropropene (R1234yf), and trans-1,3,3,3-tetrafluoropropene (R1234ze(E)), wherein the three components have a mass ratio that falls within the region surrounded by lines a, b, c, d, and e that connect 5 points (points A, B, C, D, and E) of a ternary composition diagram that has the three components as vertices of Fig. 1.

Fig.5

EP 3 626 798 A1

**Description**

Technical Field

The present disclosure relates to a composition containing a refrigerant, use of the composition, a refrigeration method using the composition, and a refrigerating machine containing the composition.

Background Art

Fluorinated hydrocarbons (hydrofluorocarbon or HFC) that contain no chlorine in their molecular structure, such as difluoromethane ($CH_2F_2$, HFC-32, R32), pentafluoroethane ($CF_3CHF_2$, HFC-125, R125), 1,1,1-trifluoroethane ($CF_3CH_3$, HFC-143a, R143a), 1,1,1,2-tetrafluoroethane ($CF_3CH_2F$, HFC-134a, R134a), and 1,1-difluoroethane ($CHF_2CH_3$, HFC-152a, R152a), have been used in refrigerants for air conditioners, refrigerating machines, refrigerators, and other similar equipment.

2,3,3,3-Tetrafluoropropene ($CF_3CF=CH_2$, HFO-1234yf, R1234yf), which is a hydrofluoroolefin (HFO) and one type of HFC, was developed as an alternative refrigerant for 1,1,1,2-tetrafluoroethane (R134a), and is considered to be a highly earth-friendly refrigerant with lower global warming potential than HFC-134a, while, like HFC-134a, having no ozone destruction impact.

A variety of mixed refrigerants of these fluorinated hydrocarbons is also suggested. For example, a three-component mixed refrigerant containing R32, R125, and R134a in a composition ratio of 23/25/52 on a mass% basis is used under the name of "R407C." A three-component mixed refrigerant containing R125, R143a, and HFC-134a in a composition ratio of 44/52/4 on a mass% basis is also used under the name of "R404A." Of these, R404A, in particular, has been widely used as a refrigerant for freezing and refrigerating storage (e.g., PTL 1 and 2).

However, R404A has a high global warming potential (GWP) of 3922; this GWP value is even higher than that of chlorodifluoromethane ($CHClF_2$, HCFC22, R22, GWP1810), which belongs to fluorinated hydrocarbons containing chlorine in their molecular structure (hydrochlorofluorocarbon, HCFC), and which was used as a refrigerant for freezing and refrigerating storage before R404A was suggested.

Although many refrigerating machines that use HCFC22 still remain, advanced countries are under pressure to completely abolish the use of HCFC by 2020, under the Montreal Protocol. Developing countries have also been required to gradually reduce the use of HCFC.

Alternative refrigerants for R404A that have been suggested so far include the mixed refrigerants disclosed in PTL 3 and 4.

Alternative refrigerants for R134a that have been suggested so far include the mixed refrigerant disclosed in PTL 5.

Citation List

Patent Literature

PTL 1: JPH09-324175A
PTL 2: US20100019190A1
PTL 3: WO2010/059677A2
PTL 4: JP2013-529703A
PTL 5: JP2007-535611A

Summary of Invention

Technical Problem

The present inventors conducted an independent evaluation on existing mixed refrigerants containing R1234yf, which is used as an alternative refrigerant for R404A or R134a. The inventors then found that there is still room for improvement regarding the toxicity of these existing alternative mixed refrigerants. Specifically, according to the current registration by the American Society of Heating, Refrigerating and Air-Conditioning Engineers (ASHRAE), the acceptable concentration (Occupational Exposure Limits, OEL) of R1234yf is 500 ppm, which is a value measured by the American Industrial Hygiene Association (AIHA). The inventors calculated the OEL of R1234yf to find 200 ppm, and sought to obtain an alternative mixed refrigerant with an OEL of 400 ppm or more as a whole composition. The current ASHRAE standards state that the calculated OEL must be evaluated based on the worst-case fractionated formulation (WCFF)) to indicate the most toxic formulation. The inventors, however, sought to obtain an alternative mixed refrigerant whose OEL is 400 ppm or more when evaluated based on the center composition. An object of the present disclosure is to solve this unique problem.

Solution to Problem

The present inventors conducted extensive research to achieve the object, and found that the object can be achieved by the use of a mixed refrigerant containing R32, R1234yf, and R1234ze(E) in a specific ratio; or a mixed refrigerant containing R134a, R1234yf, and R1234ze(E) in a specific ratio.

The inventors conducted further research based on this finding, and completed the present disclosure. The present disclosure includes the following subject matter.

Item 1. A composition comprising a refrigerant,

the refrigerant comprising

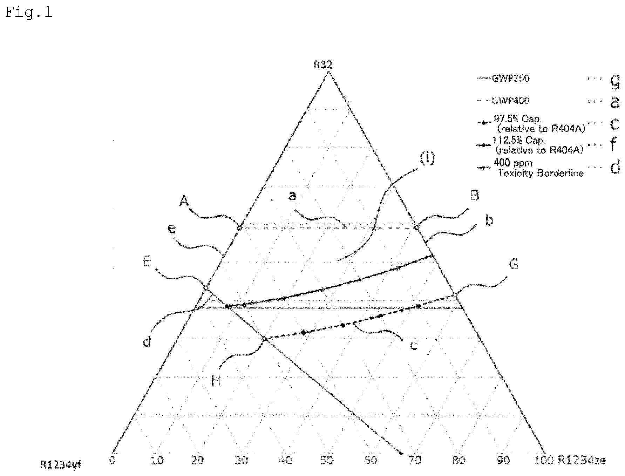

difluoromethane (R32),
2,3,3,3-tetrafluoropropene (R1234yf), and
trans-1,3,3,3-tetrafluoropropene (R1234ze(E)), wherein the three components have a mass ratio that falls within a region surrounded by lines a, b, c, d, and e that connect the following 5 points of a ternary composition diagram that has the three components as vertices of Fig. 1:

point A (R32/R1234yf/R1234ze(E)=59.0/41.0/0.0 mass%);
point B (R32/R1234yf/R1234ze(E)=58.9/0.0/41.1 mass%);
point G (R32/R1234yf/R1234ze(E)=41.5/0.0/58.5 mass%);
point H (R32/R1234yf/R1234ze(E)=30.1/49.6/20.3 mass%); and
point E (R32/R1234yf/R1234ze(E)=43.2/56.8/0 mass%), and

wherein line c is an approximate curve that connects the following points:

point G (R32/R1234yf/R1234ze(E)=41.5/0.0/58.5 mass%);
point $GH_{yf=10}$ (R32/R1234yf/R1234ze(E)=38.6/10.0/51.4 mass%);
point $GH_{yf=20}$ (R32/R1234yf/R1234ze(E)=36.0/20.0/44.0 mass%);
point $GH_{yf=30}$ (R32/R1234yf/R1234ze(E)=33.6/30.0/36.4 mass%);
point $GH_{yf=40}$ (R32/R1234yf/R1234ze(E)=31.7/40.0/28.3 mass%); and
point H (R32/R1234yf/R1234ze(E)=30.1/49.6/20.3 mass%).

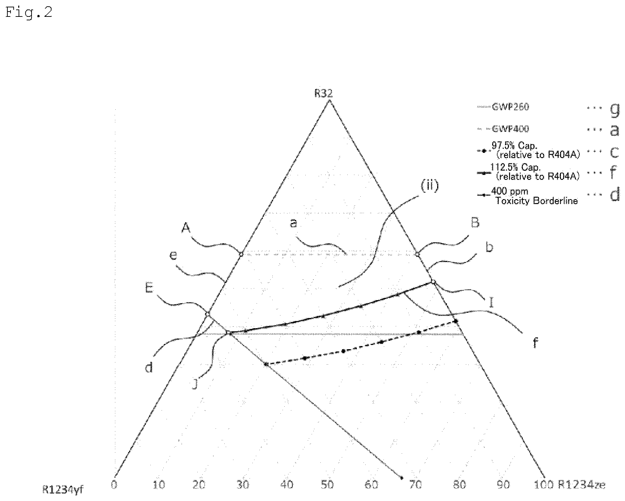

Item 2. A composition comprising a refrigerant,
the refrigerant comprising R32, R1234yf, and R1234ze(E),
wherein the three components have a mass ratio that falls within a region surrounded by lines a, b, f, d, and e that connect the following 5 points of a ternary composition diagram that has the three components as vertices of Fig. 2:

point A (R32/R1234yf/R1234ze(E)=59.0/41.0/0.0 mass%);
point B (R32/R1234yf/R1234ze(E)=5B.9/0.0/41.1 mass%);
point I (R32/R1234yf/R1234ze(E)=51.9/0.0/48.1 mass%);
point J (R32/R1234yf/R1234ze(E)=38.5/54.2/7.3 mass%); and
point E (R32/R1234yf/R1234ze(E)=43.2/56.8/0.0 mass%), and

wherein line f is an approximate curve that connects the following points:

point I (R32/R1234yf/R1234ze(E)=51.9/0/48.1 mass%);
point $IJ_{yf=10}$ (R32/R1234yf/R1234ze(E)=48.5/10.0/41.5 mass%);
point $IJ_{yf=20}$ (R32/R1234yf/R1234ze(E)=45.5/20.0/34.5 mass%);
point $IJ_{yf=30}$ (R32/R1234yf/R1234ze(E)=42.9/30.0/27.1 mass%);
point $IJ_{yf=40}$ (R32/R1234yf/R1234ze(E)=40.7/40.0/19.3 mass%);
point $IJ_{yf=50}$ (R32/R1234yf/R1234ze(E)=39.0/50.0/11.0 mass%); and
point J (R32/R1234yf/R1234ze(E)=38.5/54.2/7.3 mass%).

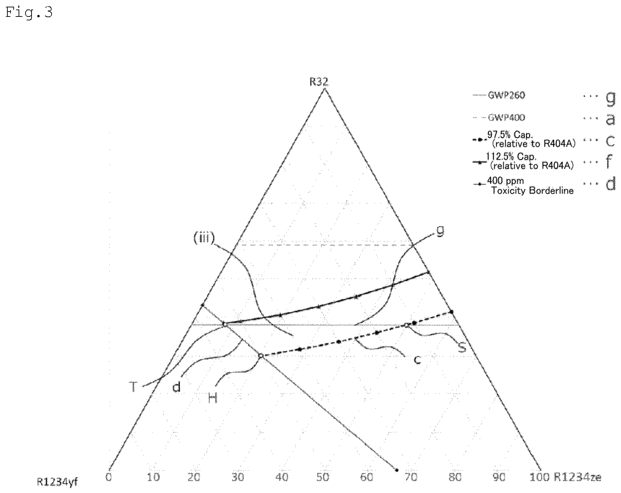

Item 3. A composition comprising a refrigerant,
the refrigerant comprising R32, R1234yf, and R1234ze(E),
wherein the three components have a mass ratio that falls within a region surrounded by lines c, d, and g that connect the following 3 points of a ternary composition diagram that has the three components as vertices of Fig. 3:

point S (R32/R1234yf/R1234ze(E)=3B.0/12.1/49.9 mass%);
point T (R32/R1234yf/R1234ze(E)=38.1/54.0/7.9 mass%); and
point H (R32/R1234yf/R1234ze(E)=30.1/49.6/20.3 mass%), and

wherein line c is an approximate curve that connects the following points:

point G (R32/R1234yf/R1234ze(E)=41.5/0.0/58.5 mass%);
point $GH_{yf=10}$ (R32/R1234yf/R1234ze(E)=38.6/10.0/51.4 mass%);
point $GH_{yf=20}$ (R32/R1234yf/R1234ze(E)=36.0/20.0/44.0 mass%);
point $GH_{yf=30}$ (R32/R1234yf/R1234ze(E)=33.6/30.0/36.4 mass%);
point $GH_{yf=40}$ (R32/R1234yf/R1234ze(E)=31.7/40.0/28.3 mass%); and
point H (R32/R1234yf/R1234ze(E)=30.1/49.6/20.3 mass%).

Item 4. The composition according to any one of Items 1 to 3, wherein the refrigerant comprises R32, R1234yf, and R1234ze(E) in a total amount of 99.5 mass% or more of the entire refrigerant.

Item 5. The composition according to any one of Items 1 to 4, wherein the refrigerant consists of R32, R1234yf, and R1234ze(E).

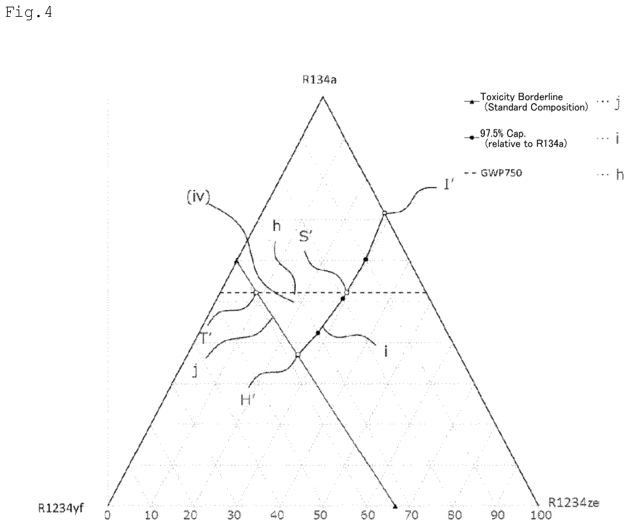

Item 6. A composition comprising a refrigerant,
the refrigerant comprising 1,1,1,2-tetrafluoroethane (R134a), R1234yf, and R1234ze(E),
wherein the three components have a mass ratio that falls within a region surrounded by lines h, i, and j that connect the following 3 points of a ternary composition diagram that has the three components as vertices of Fig. 4:

point S' (R134a/R1234yf/R1234ze(E)=52.2/18.4/29.4 mass%);
point T' (R134a/R1234yf/R1234ze(E)=52.3/39.2/8.6 mass%); and
point H' (R134a/R1234yf/R1234ze(E)=36.9/37.5/25.6 mass%), and

wherein line i is an approximate curve that connects the following points:

point I' (R134a/R1234yf/R1234ze(E)=71.5/0.0/28.5 mass%);
point $I'H'_{yf=10}$ (R134a/R1234yf/R1234ze(E)=60.3/10.0/29.7 mass%);
point $I'H'_{yf=20}$ (R134a/R1234yf/R1234ze(E)=50.7/20.0/29.3 mass%);
point $I'H'_{yf=30}$ (R134a/R1234yf/R1234ze(E)=42.4/30.0/27.6 mass%);
point $I'H'_{yf=40}$ (R134a/R1234yf/R1234ze(E)=35.4/40.0/24.6 mass%); and
point H' (R134a/R1234yf/R1234ze(E)= 36.9/37.5/25.6 mass%).

Item 7. The composition according to Item 6, wherein the refrigerant comprises R134a, R1234yf, and R1234ze(E) in a total amount of 99.5 mass% or more of the entire refrigerant.

Item 8. The composition according to Item 6 or 7, wherein the refrigerant consists of R134a, R1123, and R1234yf.

Item 9. The composition according to any one of Items 1 to 8, further comprising water.

Item 10. The composition according to any one of Items 1 to 9, further comprising a refrigerant oil.

Item 11. The composition according to Item 10, wherein the refrigerant oil is at least one refrigerant oil selected from the group consisting of polyalkylene glycols (PAG), polyol esters (POE), and polyvinyl ethers (PVE).

Item 12. The composition according to any one of Items 1 to 11, further comprising an additive, wherein the additive is at least one additive selected from the group consisting of tracers, compatibilizing agents, ultraviolet fluorescent dyes, stabilizers, and polymerization inhibitors.

Item 13. The composition according to any one of Items 1 to 12, which is for use as a refrigerant.

Item 14. The composition according to Item 13, which is for use as a refrigerant for a refrigerating machine.

Item 15. The composition according to Item 14, wherein the refrigerating machine is a refrigerator, a freezer, a water cooler, an ice maker, a refrigerating showcase, a freezing showcase, a freezing and refrigerating unit, a refrigerating machine for freezing and refrigerating warehouses, a chiller (chilling unit), a turbo refrigerator, or a screw refrigerator.

Item 16. The composition according to any one of Items 13 to 15, which is for use as an alternative refrigerant for R404A, wherein the refrigerant has the composition ratio of any one of Items 1 to 3.

Item 17. The composition according to any one of Items 13 to 15, which is for use as an alternative refrigerant for R134a, wherein the refrigerant has the composition ratio of Item 6.

Item 18. Use of the composition of any one of Items 1 to 12 as a refrigerant.

Item 19. The use according to Item 18, which is for a refrigerating machine.

Item 20. The use according to Item 19, wherein the refrigerating machine is a refrigerator, a freezer, a water cooler, an ice maker, a refrigerating showcase, a freezing showcase, a freezing and refrigerating unit, a refrigerating machine for freezing and refrigerating warehouses, a chiller (chilling unit), a turbo refrigerator, or a screw refrigerator.

Item 21. The use according to any one of Items 18 to 20, wherein the refrigerant has the composition ratio of any one of Items 1 to 3, and the composition is an alternative refrigerant for R404A.

Item 22. The use according to any one of Items 18 to 20, wherein the refrigerant has the composition ratio of Item 6, and the composition is an alternative refrigerant for R134a.

Item 23. A refrigeration method comprising operating a refrigeration cycle using the composition of any one of Items 1 to 12.

Item 24. A refrigerating machine comprising the composition of any one of Items 1 to 12.

Item 25. The refrigerating machine according to Item 24, which is a refrigerator, a freezer, a water cooler, an ice maker, a refrigerating showcase, a freezing showcase, a freezing and refrigerating unit, a refrigerating machine for freezing and refrigerating warehouses, a chiller (chilling unit), a turbo refrigerator, or a screw refrigerator.

Item 26. A method for producing a composition comprising R32, R1234yf, and R1234ze(E),
the method comprising mixing the three components such that the three components have a mass ratio that falls within a region surrounded by lines a, b, c, d, and e that connect the following 5 points of a ternary composition diagram that has the three components as vertices of Fig. 1:

point A (R32/R1234yf/R1234ze(E)=59.0/41.0/0.0 mass%);
point B (R32/R1234yf/R1234ze(E)=58.9/0.0/41.1 mass%);
point G (R32/R1234yf/R1234ze(E)=41.5/0.0/58.5 mass%);
point H (R32/R1234yf/R1234ze(E)=30.1/49.6/20.3 mass%); and
point E (R32/R1234yf/R1234ze(E)=43.2/56.8/0 mass%),

wherein line c is an approximate curve that connects the following points:

point G (R32/R1234yf/R1234ze(E)=41.5/0.0/58.5 mass%);
point $GH_{yf=10}$ (R32/R1234yf/R1234ze(E)=38.6/10.0/51.4 mass%);
point $GH_{yf=20}$ (R32/R1234yf/R1234ze(E)=36.0/20.0/44.0 mass%);
point $GH_{yf=30}$ (R32/R1234yf/R1234ze(E)=33.6/30.0/36.4 mass%);
point $GH_{yf=40}$ (R32/R1234yf/R1234ze(E)=31.7/40.0/28.3 mass%); and
point H (R32/R1234yf/R1234ze(E)=30.1/49.6/20.3 mass%).

Item 27. A method for producing a composition comprising R32, R1234yf, and R1234ze(E),

the method comprising mixing the three components such that the three components have a mass ratio that falls within a region surrounded by lines a, b, f, d, and e that connect the following 5 points of a ternary composition diagram that has the three components as vertices of Fig. 2:

point A (R32/R1234yf/R1234ze(E)=59.0/41.0/0.0 mass%);
point B (R32/R1234yf/R1234ze(E)=58.9/0.0/41.1 mass%);
point I (R32/R1234yf/R1234ze(E)=51.9/0.0/48.1 mass%);
point J (R32/R1234yf/R1234ze(E)=38.5/54.2/7.3 mass%); and
point E (R32/R1234yf/R1234ze(E)=43.2/56.8/0.0 mass%),

wherein line f is an approximate curve that connects the following points:

point I (R32/R1234yf/R1234ze(E)= 51.9/0/48.1 mass%);
point $IJ_{yf=10}$ (R32/R1234yf/R1234ze(E)=48.5/10. 0/41.5 mass%);
point $IJ_{yf=20}$ (R32/R1234yf/R1234ze(E)=45.5/20.0/34.5 mass%);
point $IJ_{yf=30}$ (R32/R1234yf/R1234ze(E)=42.9/30.0/27.1 mass%);
point $IJ_{yf=40}$ (R32/R1234yf/R1234ze(E)=40.7/40.0/19.3 mass%);
point $IJ_{yf=50}$ (R32/R1234yf/R1234ze(E)=39.0/50.0/11.0 mass%); and
point J (R32/R1234yf/R1234ze(E)=38.5/54.2/7.3 mass%).

Item 28. A method for producing a composition comprising R32, R1234yf, and R1234ze(E),
the method comprising mixing the three components such that the three components have a mass ratio that falls within a region surrounded by lines c, d, and g that connect the following 3 points of a ternary composition diagram that has the three components as vertices of Fig. 3:

point S (R32/R1234yf/R1234ze(E)=38.0/12.1/49.9 mass%);
point T (R32/R1234yf/R1234ze(E)=38.1/54.0/7.9 mass%); and
point H (R32/R1234yf/R1234ze(E)=30.1/49.7/20.2 mass%),

wherein line c is an approximate curve that connects the following points:

point G (R32/R1234yf/R1234ze(E)=41.5/0.0/58.5 mass%);
point $GH_{yf=10}$ (R32/R1234yf/R1234ze(E)=38.6/10.0/51.4 mass%);
point $GH_{yf=20}$ (R32/R1234yf/R1234ze(E)=36.0/20.0/44.0 mass%);
point $GH_{yf=30}$ (R32/R1234yf/R1234ze(E)=33.6/30.0/36.4 mass%);
point $GH_{yf=40}$ (R32/R1234yf/R1234ze(E)=31.7/40.0/28.3 mass%); and
point H (R32/R1234yf/R1234ze(E)=30.1/49.7/20.2 mass%).

Item 29. A method for producing a composition comprising R134a, R1234yf, and R1234ze(E),
the method comprising mixing the three components such that the three components have a mass ratio that falls within a region surrounded by lines h, i, and j that connect the following 3 points of a ternary composition diagram that has the three components as vertices of Fig. 3:

point S' (R134a/R1234yf/R1234ze(E)=52.2/18.4/29.4 mass%);
point T' (R134a/R1234yf/R1234ze(E)=52.3/39.2/8.6 mass%); and
point H' (R134a/R1234yf/R1234ze(E)=36.9/37.5/25.6 mass%),

wherein line i is an approximate curve that connects the following points:

point I' (R134a/R1234yf/R1234ze(E)=71.5/0/28.5 mass%);
point $I'H'_{yf=10}$ (R134a/R1234yf/R1234ze(E)=60.3/10.0/29.7 mass%);
point $I'H'_{yf=20}$ (R134a/R1234yf/R1234ze(E)=50.7/20.0/29.3 mass%);
point $I'H'_{yf=30}$ (R134a/R1234yf/R1234ze(E)=42.4/30.0/27.6 mass%);
point $I'H'_{yf=40}$ (R134a/R1234yf/R1234ze(E)=35.4/40.0/24.6 mass%); and
point H' (R134a/R1234yf/R1234ze(E)= 36.9/37.5/25.6 mass%).

Advantageous Effects of Invention

According to the present disclosure, an alternative mixed refrigerant is provided that is for use as an alternative refrigerant for R404A or R134a, and that is less toxic than existing mixed refrigerants containing R1234yf.

Brief Description of Drawings

Fig. 1 shows the formulation of a mixed refrigerant containing R32, R1234yf, and R1234ze(E) according to the present disclosure illustrated in a ternary composition diagram (region (i) surrounded by lines a, b, c, d, and e that connect points A, B, G, H, and E indicated by circles (o)).

Fig. 2 shows the formulation of a mixed refrigerant containing R32, R1234yf, and R1234ze(E) according to the present disclosure illustrated in a ternary composition diagram (region (ii) surrounded by lines a, b, f, d, and e that connect points A, B, I, J, and E indicated by circles (o)).

Fig. 3 shows the formulation of a mixed refrigerant containing R32, R1234yf, and R1234ze(E) according to the present disclosure illustrated in a ternary composition diagram (region (iii) surrounded by lines c, d, and g that connect points S, T, and H indicated by circles (o)).

Fig. 4 shows the formulation of a mixed refrigerant containing R134a, R1234yf, and R1234ze(E) according to the present disclosure illustrated in a ternary composition diagram (region (iv) surrounded by lines h, i, and j that connect points S', T', and H' indicated by circles (o)).

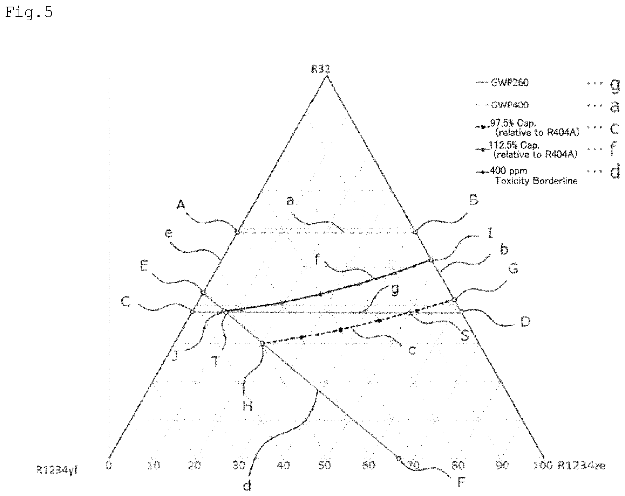

Fig. 5 illustrates the points and lines of Figs. 1 to 3.

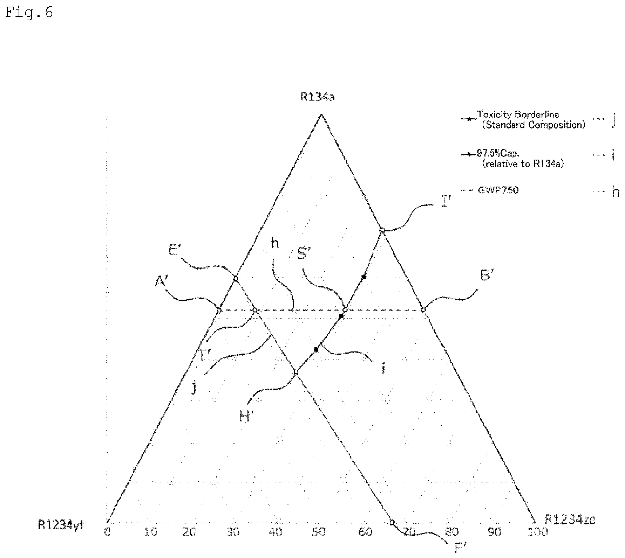

Fig. 6 illustrates the points and lines of Fig. 4.

Description of Embodiments

Definition of Terms

In this specification, when a positional relation in the ternary diagrams is described, "top and bottom" and "right and left" respectively indicate the top and bottom and the right and left in the ternary diagrams. The "R32 side" indicates the direction toward the vertex of R32 in the ternary diagrams; the same applies to other components.

In this specification, the term "refrigerant" includes at least compounds that are specified in ISO817 (International Organization for Standardization), and that are given a refrigerant number (ASHRAE number) representing the type of refrigerant with R at the beginning; and further includes refrigerants that have properties equivalent to those of such refrigerants, even though a refrigerant number is not given. Refrigerants are broadly divided into "fluorocarbon-based compounds" and "non-fluorocarbon-based compounds," in terms of the structure of the compounds. "Fluorocarbon-based compounds" include chlorofluorocarbons (CFC), hydrochlorofluorocarbons (HCFC), and hydrofluorocarbons (HFC). "Non-fluorocarbon-based compounds" include propane (R290), propylene (R1270), butane (R600), isobutane (R600a), carbon dioxide (R744), and ammonia (R717).

In this specification, when the term "alternative" is used in the context in which the first refrigerant is replaced with the second refrigerant, the first type of "alternative" means that equipment designed for operation using the first refrigerant can be operated using the second refrigerant under optimum conditions, optionally with changes of only a few parts (at least one member of the refrigerant oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes the second type of "alternative" that means that equipment designed for operation using the second refrigerant is operated for the same use as the existing use with the first refrigerant, using the second refrigerant. This type of alternative means that the same use is achieved with an alternative refrigerant.

In the present specification, the term "refrigerating machine" in the broad sense refers to machines in general that draw heat from an object or space to make its temperature lower than the temperature of ambient air, and maintain the low temperature. In other words, refrigerating machines in the broad sense refer to conversion machines that gain energy from the outside to do work; and that perform energy conversion, in order to transfer heat from where the temperature is lower to where the temperature is higher. In the present disclosure, "refrigerating machine" is synonymous with "heat pump" in the broad sense.

In the present disclosure, the term "refrigerating machine" is distinguished from "heat pump" in the narrow sense, depending on the difference in the applied temperature range and operating temperature. In this case, a machine whose low-temperature heat source is placed in a temperature range lower than air temperature may be called a "refrigerating machine," while a machine whose low-temperature heat source is placed around air temperature to use the heat-release action caused by driving the refrigeration cycle may be called a "heat pump." Additionally, there are machines that have both the function of refrigerating machines in the narrow sense and the function of heat pumps in the narrow sense, despite them being a single machine; for example, air conditioners that provide both a "cooling mode" and a "heating mode." In the present specification, unless otherwise indicated, the terms "refrigerating machine" and "heat pump" are used in the broad sense throughout the specification.

In the present disclosure, "OEL" refers to a value evaluated based on the center composition, unless otherwise indicated. However, calculation is performed with the OEL of each refrigerant as described below.

R32: 1000 ppm
R134a: 1000 ppm
R125: 1000 ppm
R143a: 1000 ppm
R1234yf: 200 ppm
R1234ze(E): 800 ppm

The OEL of the center composition of a mixed refrigerant is calculated in accordance with the following formula.

$$\mathrm{OEL}= \frac{1}{\dfrac{mf_1}{a_1} + \dfrac{mf_2}{a_2} + \ldots + \dfrac{mf_n}{a_n}}$$

wherein $a_n$ represents the OEL of each refrigerant compound, and $mf_n$ represents the mole fraction of each refrigerant compound.

1. Composition

The composition according to the present disclosure comprises a refrigerant. The composition according to the present disclosure may further optionally comprise other components.

1.1. Refrigerant 1 (R32/R1234yf/R1234ze(E))

In an embodiment, a refrigerant contained in the composition according to the present disclosure comprises R32, R1234yf, and R1234ze(E). This refrigerant may be referred to as "refrigerant 1."

The mass ratio of these three components falls within the region ((i)) surrounded by lines a, b, c, d, and e that connect the following 5 points of a ternary composition diagram that has the three components as vertices of Fig. 1:

point A (R32/R1234yf/R1234ze(E)=59.0/41.0/0.0 mass%);
point B (R32/R1234yf/R1234ze(E)=58.9/0.0/41.1 mass%);
point G (R32/R1234yf/R1234ze(E)=41.5/0.0/58.5 mass%);
point H (R32/R1234yf/R1234ze(E)=30.1/49.6/20.3 mass%); and
point E (R32/R1234yf/R1234ze(E)=43.2/56.8/0 mass%).

In Fig. 1, points A, B, G, H, and E, which are indicated by circles (o), have the coordinates described above.

Point A indicates the point at which GWP is 400 when R1234ze(E)=0 mass%, and point B indicates the point at which GWP is 400 when R1234yf=0 mass%. Straight line a connects point A and point B, and GWP is less than 400 in a composition ratio that falls below this line (R1234yf side, R1234ze(E) side). Straight line a is represented as follows.

$z=1.0024y+41.1$, $x=100-y-z$, $41.1 \geq y \geq 0$

wherein mass% of R32=$x$, mass% of R1234yf=$y$, and mass% of R1234ze(E)=$z$.

Point G and point H are both on curve c. A mixed refrigerant in a composition ratio on curve c has a refrigerating capacity of 97.5% relative to R404A. A mixed refrigerant in a composition ratio within the region on the left side of curve c (R32 side) has a refrigerating capacity of more than 97.5% relative to R404A.

Curve c was calculated from the points at which the mixed refrigerant has a refrigerating capacity of 97.5% relative to 404A, when the concentration of R1234yf is 0, 10, 20, 30, and 40 mass%, and point H at which the OEL calculated above is 400 ppm and the refrigerating capacity relative to 404A is 97.5%, as shown in the table below using the least-squares method.

Table 1

| Item | Unit | G | GH$_{yf-10}$ | GH$_{yf-20}$ | GH$_{yf-30}$ | GH$_{yf-40}$ | H |
|---|---|---|---|---|---|---|---|
| R32 | mass% | 41.5 | 38.6 | 36.0 | 33.6 | 31.7 | 30.1 |
| R1234yf | mass% | 0.0 | 10.0 | 20.0 | 30.0 | 40.0 | 49.6 |
| R1234ze(E) | mass% | 58.5 | 51.4 | 44.0 | 36.4 | 28.3 | 20.3 |
| x=R32 | | $x=0.0016y^2-0.3101y+41.518$ | | | | | |
| y=R1234yf | | y | | | | | |
| z=R1234ze(E) | | z=100-x-y | | | | | |

(mass% of R32=x, mass% of R1234yf=y, and mass% of R1234ze(E)=z)

Point H and point E are both on straight line d. A mixed refrigerant in a composition ratio on straight line d has an OEL of 400 ppm, when evaluated based on the center composition. A mixed refrigerant in a composition ratio within the region on the right side of this line (R32 side, R1234ze(E) side) has an OEL of more than 400 ppm, when evaluated based on the center composition.

Straight line d connects point E and point F described below.

Table 2

| Alphabetic Character | R32 | R1234yf | R1234ze (E) | R32 | R1234yf | R1234ze (E) | OEL of Mixed Refrigerant (200 ppm-yf) | CEL of Mixed Refrigerant <500 ppm-yf |
|---|---|---|---|---|---|---|---|---|
| | mass% | mass% | mass% | Mole Fraction | Mole Fraction | Mole Fraction | ppm | ppm |
| E | 43.2 | 56.8 | 0.0 | 0.6251 | 0.3749 | 0.0000 | 400 | 727 |
| J | 38.5 | 54.2 | 7.3 | 0.5785 | 0.3715 | 0.0500 | 400 | 723 |
| T | 38.1 | 54.0 | 7.9 | 0.5744 | 0.3713 | 0.0543 | 400 | 722 |
| H | 30.1 | 49.6 | 20.2 | 0.4856 | 0.3650 | 0.1494 | 400 | 713 |
| F | 0.0 | 33.3 | 66.7 | 0.0000 | 0.3330 | 0.6670 | 400 | 667 |

Straight line d is represented as follows. z=-2.8383y+161.22, x=100-y-z, 56.8≥y≥33.3 wherein mass% of R32=x, mass% of R1234yf=y, and mass% of R1234ze(E)=z.

Thus, a ternary mixed refrigerant comprising R32, R1234yf, and R1234ze(E) in a composition ratio within the region surrounded by 5 points (points A, B, G, H, and E) (ABGHE region) has a GWP of 400 or less, a refrigerating capacity of 97.5% or more relative to R404A, and an OEL of 400 ppm or more when evaluated based on the center composition.

A ternary mixed refrigerant in a composition ratio within the ABGHE region (ABGHE ternary mixed refrigerant) has a refrigerating capacity equivalent to that of R404A, while being a low-GWP refrigerant, even exhibiting a low toxicity. Thus, such a ternary mixed refrigerant is suitable for use as an alternative refrigerant for R404A, in particular, as an alternative retrofit refrigerant.

The ternary mixed refrigerant comprising R32, R1234yf, and R1234ze(E) preferably has a mass ratio of these three components that falls within the region ((ii)) surrounded by lines a, b, f, d, and e that connect the following 5 points of a ternary composition diagram that has the three components as vertices of Fig. 2:

point A (R32/R1234yf/R1234ze(E)=59.0/41.0/0.0 mass%);
point B (R32/R1234yf/R1234ze(E)=58.9/0.0/41.1 mass%);
point I (R32/R1234yf/R1234ze(E)=51.9/0.0/48.1 mass%);
point J (R32/R1234yf/R1234ze(E)=38.5/54.2/7.3 mass%); and
point E (R32/R1234yf/R1234ze(E)=43.2/56.8/0.0 mass%).

In Fig. 2, points A, B, I, J, and E, which are indicated by circles (o), have the coordinates described above.

Point A and point B are both on straight line a, and straight line a is as described above.

Point I and point J are both on curve f. A mixed refrigerant in a composition ratio on curve f has a refrigerating capacity of 112.5% relative to R404A. A mixed refrigerant in a composition ratio within the region on the left side of this line (R32 side) has a refrigerating capacity of more than 112.5% relative to R404A.

Curve f is determined as described below using the least-squares method.

Table 3

| Item | Unit | I | $IJ_{yf\text{-}10}$ | $IJ_{yf\text{-}20}$ | $IJ_{yf\text{-}30}$ | $IJ_{yf\text{-}40}$ | $IJ_{yf\text{-}50}$ | J |
|---|---|---|---|---|---|---|---|---|
| R32 | mass% | 51.9 | 48.5 | 45.5 | 42.9 | 40.7 | 39.0 | 38.5 |
| R1234yf | mass% | 0.0 | 10.0 | 20.0 | 30.0 | 40.0 | 50.0 | 54.2 |
| R1234ze(E) | mass% | 48.1 | 41.5 | 34.5 | 27.1 | 19.3 | 11.0 | 7.3 |
| x=R32 | | $x=0.0022y^2-0.366y+51.924$ | | | | | | |
| y=R1234yf | | $y$ | | | | | | |
| z=R1234ze(E) | | $z=100-x-y$ | | | | | | |

(mass% of R32=x, mass% of R1234yf=y, and mass% of R1234ze(E)=z)

Point J and point E are both on straight line d, and straight line d is as described above.

Thus, a ternary mixed refrigerant comprising R32, R1234yf, and R1234ze(E) in a composition ratio that falls within the region surrounded by lines that connect 5 points (points A, B, I, J, and E) (ABIJE region) has a GWP of 400 or less, a refrigerating capacity of 112.5% or more relative to 404A, and an OEL of 400 ppm or more when evaluated based on the center composition.

A ternary mixed refrigerant in a composition ratio within the ABIJE region (ABIJE ternary mixed refrigerant) has a refrigerating capacity equivalent to that of R404A, while being a low-GWP refrigerant, even exhibiting a low toxicity. Thus, such a ternary mixed refrigerant is suitable for use as an alternative refrigerant for R404A.

The ternary mixed refrigerant comprising R32, R1234yf, and R1234ze(E) preferably has a mass ratio of these three components that falls within the region ((iii)) surrounded by lines c, d, and g that connect the following 3 points of a ternary composition diagram that has the three components as vertices of Fig. 3:

point S (R32/R1234yf/R1234ze(E)=38.0/12.1/49.9 mass%);
point T (R32/R1234yf/R1234ze(E)=38.1/54.0/7.9 mass%); and
point H (R32/R1234yf/R1234ze(E)=30.1/49.7/20.2 mass%).

In Fig. 3, points S, T, and H, which are indicated by circles (o), have the coordinates described above.

Point S and point T are both on straight line g. Straight line g connects the following point C at which GWP is 260 when R1234ze(E)=0 mass%, and the following point D at which GWP is 260 when R1234yf=0 mass%:

point C (R32/R1234yf/R1234ze(E)=38.1/61.9/0.0 mass%), and
point D (R32/R1234yf/R1234ze(E)=38.0/0.0/62.0 mass%).

A mixed refrigerant in a composition ratio on straight line g has a GWP of 260. A mixed refrigerant in a composition ratio that falls within the region below this line (R1234yf side, R1234ze(E) side) has a GWP of less than 260.

Straight line g is represented as follows.
$z=1.0016y+62.0$, $x=100-y-z$, $61.9 \geq y \geq 0$

Point S and point H are both on curve c, and curve c is as described above.

Point T and point H are both on straight line d, and straight line d is as described above.

Thus, a ternary mixed refrigerant comprising R32, R1234yf, and R1234ze(E) in a composition ratio that falls within the region surrounded by lines that connect 3 points (points S, T, and H) (STH region) has a GWP of 260 or less, a refrigerating capacity of 97.5% or more relative to R404A, and an OEL of 400 ppm or more when evaluated based on the center composition.

Thus, a ternary mixed refrigerant in a composition ratio that falls within the STH region (STH ternary mixed refrigerant) has a refrigerating capacity equivalent to that of R404A, while being a low-GWP refrigerant, even exhibiting a low toxicity. Thus, such a ternary mixed refrigerant is suitable for use as an alternative refrigerant for R404A, in particular, as an alternative retrofit refrigerant.

Refrigerant 1 may further comprise an additional refrigerant in addition to R32, R1234yf, and R1234ze(E), as long as the above-described characteristics of the ternary mixed refrigerant comprising R32, R1234yf, and R1234ze(E) are not impaired. From this viewpoint, the mixed refrigerant preferably comprises R32, R1234yf, and R1234ze(E) in a total amount of 99.5 mass% or more of the entire mixed refrigerant. In this case, the mixed refrigerant comprises the additional refrigerant in a total amount of 0.5 mass% or less of the entire mixed refrigerant. From the same viewpoint, the mixed refrigerant comprises R32, R1234yf, and R1234ze(E) in a total amount of more preferably 99.75 mass% or more, and still more preferably 99.9 mass% or more of the entire mixed refrigerant.

The additional refrigerant is not limited, and can be selected from a wide range of refrigerants. The mixed refrigerant may comprise a single additional refrigerant, or two or more additional refrigerants.

1.2. Refrigerant 2 (R134a/R1234yf/R1234ze(E))

In an embodiment, the refrigerant contained in the composition according to the present disclosure comprises R134a, R1234yf, and R1234ze(E). This refrigerant may be referred to as "refrigerant 2."

The mass ratio of these three components falls within the region ((iv)) surrounded by lines h, i, and j that connect the following 3 points of a ternary composition diagram that has the three components as vertices of Fig. 4:

point S' (R134a/R1234yf/R1234ze(E)=52.2/18.4/29.4 mass%);
point T' (R134a/R1234yf/R1234ze(E)=52.3/39.2/8.6 mass%); and
point H' (R134a/R1234yf/R1234ze(E)=36.9/37.5/25.6 mass%).

In Fig. 1, points S', T', and H', which are indicated by circles (o), have the coordinates described above.

Point S' and point T' are both on straight line h. A mixed refrigerant in a composition ratio on straight line h has a GWP of 750. A mixed refrigerant in a composition ratio within the region below this line (R1234yf side, R1234ze(E) side) has a GWP of less than 750.

Straight line h is represented as follows. $z=-1.0021y+47.8$, $x=100-y-z$, $47.8 \geq y \geq 0$ wherein mass% of R134a=x, mass% of R1234yf=y, and mass% of R1234ze(E)=z.

Point S' and point H' are both on curve i. A mixed refrigerant in a composition ratio on curve i has a refrigerating capacity of 97.5% relative to R134a. A mixed refrigerant in a composition ratio that falls within the region on the left side of this line (R134a side) has a refrigerating capacity of more than 97.5% relative to R134a.

Curve i is determined as follows using the least-squares method.

Table 4

| Ttem | Unit | G' | GH$_{yf-10}$ | S' | GH$_{yf-20}$ | GH$_{yf-30}$ | H' |
|---|---|---|---|---|---|---|---|
| R134a | mass% | 71.5 | 60.3 | 52.2. | 50.7 | 42.4 | 36.9 |
| R1234yf | mass% | 0.0 | 10.0 | 18.4 | 20.0 | 30.0 | 37.5 |
| R1234ze(E) | mass% | 28.5 | 29.7 | 30.0 | 29.3 | 27.6 | 25.6 |
| x=R134a | | $x=0.0067y^2-1.1723y+71.456$ | | | | | |
| y=R1234yf | | y | | | | | |
| z=R1234ze (E) | | z=100-x-y | | | | | |

(mass% of R134a=x, mass% of R1234yf=y, and mass% of R1234ze(E)=z)

Point H' and point T' are both on straight line d. A mixed refrigerant in a composition ratio on straight line j has an OEL of 400 ppm when evaluated based on the center composition. A mixed refrigerant in a composition ratio that falls within the region on the right side of this line (R134a side, R1234ze(E)side) has an OEL of more than 400 ppm when evaluated based on the center composition.

Straight line j is a point (line の誤記?) that connects points E' and F' described below.

Table 5

| Alphabetic Character | 134a | 1234yf | 1234ze (E) | 134a | 1234yf | 1234ze (E) | OEL of Mixed Refrigerant (200 ppm-yf) | OEL of Mixed Refrigerant (500 ppm-yf) |
|---|---|---|---|---|---|---|---|---|
| | mass% | mass% | mass% | Mole Fraction | Mole Fraction | Mole Fraction | ppm | ppm |
| E' | 60.0 | 40.0 | 0.0 | 0.6264 | 0.3736 | 0.0000 | 400 | 723 |
| T' | 52.3 | 39.2 | 8.5 | 0.5506 | 0.3693 | 0.0801 | 400 | 720 |
| H' | | 37.5 | 25.6 | | 0.3594 | 0.2453 | 400 | 704 |
| F' | 36.9 0.0 | 33.3 | 66.7 | 0.0000 | 0.3330 | 0.6670 | 400 | 667 |

Straight line j is represented as follows.
z=-9.9552y+398.21, x=100-y-z, 40.0≥y≥33.3 wherein mass% of R134a=x, mass% of R1234yf=y, and mass% of R1234ze(E)=z.

Thus, a ternary mixed refrigerant comprising R134a, R1234yf, and R1234ze(E) in a composition ratio that falls within the region surrounded by 3 points (points S', T', and H') (S'T'H' region) has a GWP of 750 or less, a refrigerating capacity of 97.5% or more relative to R134a, and an OEL of 400 ppm or more when evaluated based on the center composition.

A ternary mixed refrigerant in a composition ratio that falls within the S'T'H' region (S'T'H' ternary mixed refrigerant) has a refrigerating capacity equivalent to that of R134a, while being a low-GWP refrigerant, even exhibiting a low toxicity. Thus, such a ternary mixed refrigerant is suitable for use as an alternative refrigerant for R134a, in particular, as an alternative retrofit refrigerant.

Refrigerant 2 may further comprise an additional refrigerant in addition to R134a, R1234yf, and R1234ze(E), as long as the above-described characteristics of the ternary mixed refrigerant comprising R134a, R1234yf, and R1234ze(E) are not impaired. From this viewpoint, the mixed refrigerant preferably comprises R134a, R1234yf, and R1234ze(E) in a total amount of 99.5 mass% or more of the entire mixed refrigerant. In this case, the mixed refrigerant comprises the additional refrigerant in a total amount of 0.5 mass% or less of the entire mixed refrigerant. From the same viewpoint, the mixed refrigerant comprises R134a, R1234yf, and R1234ze(E) in a total amount of more preferably 99.75 mass% or more, and still more preferably 99.9 mass% or more of the entire mixed refrigerant.

The additional refrigerant is not limited, and can be selected from a wide range of refrigerants. The mixed refrigerant may comprise a single additional refrigerant, or two or more additional refrigerants.

1.3. Other Components

The composition according to the present disclosure may further optionally comprise at least one member of the following other components in addition to the refrigerant.

1.3.1. Water

The composition according to the present disclosure may comprise a small amount of water. The water content in the composition is preferably 0.1 parts by mass or less, per 100 parts by mass of the refrigerant. A small amount of water contained in the composition stabilizes double bonds in the molecules of unsaturated fluorocarbon-based compounds that can be present in the refrigerant; and makes it less likely that the unsaturated fluorocarbon-based compounds will be oxidized, thus increasing the stability of the composition.

1.3.2. Refrigerant Oil

The composition according to the present disclosure may comprise a single refrigerant oil, or two or more refrigerant oils.

The refrigerant oil is not limited, and can be suitably selected from typically used refrigerant oils. In this case, refrigerant oils that are superior in increasing action on the miscibility with the mixture and stability of the mixture, for example, are suitably selected as necessary.

The refrigerant oil is preferably, for example, at least one member selected from the group consisting of polyalkylene glycols (PAG), polyol esters (POE), and polyvinyl ethers (PVE).

A refrigerant oil with a kinematic viscosity of 5 to 400 cSt at 40°C is preferable from the standpoint of lubrication.

The content of the refrigerant oil is not limited, and is typically 10 to 50 mass% of the entire composition.

The composition according to the present disclosure may further optionally comprise at least one additive. Examples of additives include those described below.

### 1.3.3. Tracer

A tracer is added to the composition according to the present disclosure at a detectable concentration such that when the composition has been diluted, contaminated, or undergone some other changes, the tracer can trace the changes.

The composition according to the present disclosure may comprise a single tracer, or two or more tracers.

The tracer is not limited, and can be suitably selected from typically used tracers.

Examples of tracers include hydrofluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon or a fluoroether.

### 1.3.4. Compatibilizing Agent

The composition according to the present disclosure may comprise a single compatibilizing agent, or two or more compatibilizing agents.

The compatibilizing agent is not limited, and can be suitably selected from typically used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkane. The compatibilizing agent is particularly preferably a polyoxyalkylene glycol ether.

### 1.3.5. Ultraviolet Fluorescent Dye

The composition according to the present disclosure may comprise a single ultraviolet fluorescent dye, or two or more ultraviolet fluorescent dyes.

The ultraviolet fluorescent dye is not limited, and can be suitably selected from typically used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 1.3.6. Stabilizer

The composition according to the present disclosure may comprise a single stabilizer, or two or more stabilizers.

The stabilizer is not limited, and can be suitably selected from typically used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine, and diphenyl amine.

Examples of stabilizers also include butylhydroxyxylene, and benzotriazole.

The content of the stabilizer is not limited. Typically, the content of the stabilizer is preferably 0.01 to 5 parts by mass, and more preferably 0.05 to 2 parts by mass, per 100 parts by mass of the refrigerant.

### 1.3.7. Polymerization Inhibitor

The composition according to the present disclosure may comprise a single polymerization inhibitor, or two or more polymerization inhibitors.

The polymerization inhibitor is not limited, and can be suitably selected from typically used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Typically, the content of the polymerization inhibitor is preferably 0.01 to 5 parts by mass, and more preferably 0.05 to 2 parts by mass, per 100 parts by mass of the refrigerant.

## 2. Use

The composition according to the present disclosure is usable as a refrigerant.

The composition according to the present disclosure is suitable for use, in particular, as a refrigerant for refrigerating machines (refrigerators).

The refrigerating machine is not limited. Examples of refrigerating machines (refrigerators) include refrigerators, freezers, water coolers, ice makers, refrigerating showcases, freezing showcases, freezing and refrigerating units, refrigerating machines for freezing and refrigerating warehouses, chillers (chilling units), turbo refrigerators, and screw refrigerators.

The composition according to the present disclosure that comprises refrigerant 1 as the refrigerant is suitable for use as an alternative refrigerant for R404A. The composition according to the present disclosure is also usable as an alternative retrofit refrigerant, an alternative nearly drop-in refrigerant, or an alternative drop-in refrigerant for R404A.

The composition according to the present disclosure that comprises refrigerant 2 as the refrigerant is suitable for use as an alternative refrigerant for R134a. The composition according to the present disclosure is also usable as an alternative retrofit refrigerant, an alternative nearly drop-in refrigerant, or an alternative drop-in refrigerant for R134a.

## 3. Refrigeration Method

A target object can be frozen using the composition according to the present disclosure by a method comprising operating a refrigeration cycle. For example, the refrigeration cycle can be structured by circulating the composition according to the present disclosure through a compressor.

It is also possible to structure an apparatus for refrigeration cycle in which the composition according to the present disclosure is circulated through a compressor.

## Examples

The following provides a more detailed description with reference to Examples. However, the present disclosure is not limited to these Examples.

A composition containing a mixture of R32, R134a, R1234yf, and 1234ze(E) was evaluated for the GWP based on the values in the fourth assessment report of the Intergovernmental Panel on Climate Change (IPCC). The refrigerating capacity of a composition containing a mixture of R32, R1234yf, and 1234ze(E) was determined by performing theoretical calculation for refrigeration cycle of the mixed refrigerant, using the Reference Fluid Thermodynamic and Transport Properties Database (REFPROP 9.0) of the National Institute of Science and Technology (NIST), under the following conditions.

Evaporating Temperature -40°C
Condensation Temperature 40°C
Superheating Temperature 20 K
Subcooling Temperature 0 K
Compressor Efficiency 70%

Tables 6 to 8 illustrate the GWP, the COP relative to R404A, the refrigerating capacity relative to R404A, and the compressor outlet pressure (compared with the discharge pressure) calculated based on these results.

The refrigerating capacity of a composition containing a mixture of R134a, R1234yf, and 1234ze(E) was determined by performing theoretical calculation for refrigeration cycle of the mixed refrigerant, using the Reference Fluid Thermodynamic and Transport Properties Database (REFPROP 9.0) of the National Institute of Science and Technology (NIST) under the following conditions.

Evaporating Temperature 5°C
Condensation Temperature 45°C
Superheating Temperature 1 K
Subcooling Temperature 5 K

Compressor Efficiency 70%

Tables 9 and 10 illustrate the GWP, the COP relative to R404A, the refrigerating capacity relative to R404A, and the compressor outlet pressure (compared with the discharge pressure) calculated based on these results.

The coefficient of performance (COP) was determined in accordance with the following formula.

$$COP = (refrigerating\ capacity\ or\ heating\ capacity)/power\ consumption$$

The OEL of a mixed refrigerant was calculated in accordance with the following formula.

$$OEL = \cfrac{1}{\cfrac{mf_1}{a_1} + \cfrac{mf_2}{a_2} + \ldots + \cfrac{mf_n}{a_n}}$$

wherein an represents the OEL of each refrigerant compound; and mfn represents the mole fraction of each refrigerant compound.

Calculation was performed with the OEL of each refrigerant as follows.

R32: 1000 ppm

R134a: 1000 ppm

R125: 1000 ppm

R143a: 1000 ppm

R1234yf: 200 ppm

R1234ze(E): 800 ppm

The calculated OEL was evaluated based on the center composition.

Table 6

| Item | | Unit | Comparative Example 1 | Example 1 | Example 2 | Example 3 | Example 4 | Example 5 | Example 6 |
|---|---|---|---|---|---|---|---|---|---|
| | | | R404A | G | $GH_{yf=10}$ | $GH_{yf=20}$ | $GH_{yf=30}$ | $GE_{yf=40}$ | H |
| Composition | R32 | mass% | | 41.5 | 38.6 | 36.0 | 33.6 | 31.7 | 30.1 |
| | R1234yf | mass% | | 0.0 | 10.0 | 20.0 | 30.0 | 40.0 | 49.6 |
| | R1234ze | mass % | | 58.5 | 51.4 | 44.0 | 36.4 | 28.3 | 20.3 |
| CWP | | Year | 3922 | 284 | 264 | 246 | 230 | 217 | 206 |
| Coefficient of Performance Relative to R404A | | % | 100 | 111 | 111 | 110 | 110 | 109 | 109 |
| Refrigerating Capacity Relative to K404A | | % | 100 | 97.5 | 97.5 | 97.5 | 97.5 | 97.5 | 97.5 |
| Acceptable Concentration | | ppm | 1000 | 911 | 734 | 611 | 520 | 452 | 400 |

Table 7

| item | | Unit | Example 7 | Example 8 | Example 9 | Example 10 | Example 11 | Example 12 | Example 13 |
|---|---|---|---|---|---|---|---|---|---|
| | | | I | IJ$_{yf-10}$ | IJ$_{yf-20}$ | IJ$_{yf-30}$ | IJ$_{yf-40}$ | IJ$_{yf-50}$ | J |
| Composition | R32 | mass% | 51.9 | 48.5 | 45.5 | 42.9 | 40.7 | 39.0 | 38.5 |
| | R1234yf | mass% | 0.0 | 10.0 | 20.0 | 30.0 | 40.0 | 50.0 | 54.2 |
| | R1234ze | mass% | 48.1 | 41.5 | 34.5 | 27.1 | 19.3 | 11.0 | 7.3 |
| GWP | | Year | 353 | 330 | 310 | 292 | 277 | 266 | 262 |
| Coefficient of Performance Relative to R404A | | % | 111 | 110 | 110 | 110 | 110 | 109 | 109 |
| Refrigerating Capacity Relative to R404A | | % | 112.5 | 112.5 | 112.5 | 112.5 | 112.5 | 112.5 | 112.5 |
| Acceptable Concentration | | ppm | 931 | 758 | 635 | 544 | 474 | 419 | 400 |

Table 8

| Item | | Unit | Example 14 | Example 15 | Comparative Example 2 | Comparative Example 3 | Example 16 | Example 17 | Example 18 | Comparative Example 4 |
|---|---|---|---|---|---|---|---|---|---|---|
| | | | A | B | C | D | S | T | E | F |
| Composition | R32 | mass% | 59.0 | 58.8 | 38.1 | 38.0 | 38.0 | 38.1 | 43.2 | 0.0 |
| | R1234yf | mass% | 41.0 | 0.0 | 61.9 | 0.0 | 12.1 | 54.0 | 56.8 | 33.3 |
| | R1234ze | mass% | 0.0 | 41.1 | 0.0 | 62.0 | 49.9 | 7.9 | 0.0 | 66.7 |
| GWP | | Year | 400 | 400 | 260 | 260 | 260 | 260 | 294 | 479 |
| Coefficient of Performance Relative to R404A | | % | 110 | 111 | 109 | 111 | 110 | 109 | 109 | 108 |
| Refrigerating Capacity Relative to R404A | | % | 141.5 | 122.6 | 113.1 | 92.4 | 97.5 | 111.8 | 120.5 | 54.9 |
| Acceptable Concentration | | ppm | 509 | 943 | 370 | 904 | 705 | 400 | 400 | 400 |

EP 3 626 798 A1

Table 9

| Item | | Unit | Comparative Example 5 | Comparative Example 6 | Comparative Example 7 | Example 19 | Example 20 | Example 21 | Example 22 |
|---|---|---|---|---|---|---|---|---|---|
| | | | R134a | I' | I'H'$_{yf=10}$ | S' | I'H'$_{yf=20}$ | I'H'$_{yf=30}$ | H' |
| Composition | R134a | mass% | 100.0 | 71.5 | 60.3 | 52.2 | 50.7 | 42.4 | 36.9 |
| | R1234yf | mass% | 0.0 | 0.0 | 10.0 | 18.4 | 20.0 | 30.0 | 37.5 |
| | R1234ze | maas% | 0.0 | 28.5 | 29.7 | 29.4 | 29.3 | 27.6 | 25.6 |
| GWP | | Year | 1430 | 1024 | 864 | 750 | 728 | 609 | 531 |
| Coefficient of Performance Relative to R134A | | % | 100 | 99 | 99 | 98 | 98 | 98 | 98 |
| Refrigerating Capacity Relative to R134A | | % | 100.0 | 97.5 | 97.5 | 97.5 | 97.5 | 97.5 | 97.5 |
| Acceptable Concentration | | ppm | 1000 | 938 | 693 | 567 | 548 | 453 | 400 |

Table 10

| item | | Unit | Comparative Example 6 | Comparative Example 7 | Example 23 | Comparative Example 8 | Comparative Example 9 |
|---|---|---|---|---|---|---|---|
| | | | A' | B' | T' | E' | F' |
| Composition | R134a | mass% | 52.3 | 52.2 | 52.3 | 60.0 | 0.0 |
| | R1234yf | mass% | 47.7 | 0.0 | 39.2 | 40.0 | 33.3 |
| | R1234ze | mass% | 0.0 | 47.8 | 8.6 | 0.0 | 66.7 |
| GWP | | Year | 750 | 750 | 750 | 860 | 5 |
| Coefficient of Performance Relative to R134a | | % | 98 | 99 | 98 | 98 | 98 |
| Refrigerating Capacity Relative to R134a | | % | 100.5 | 93.6 | 100.1 | 100.9 | 85.7 |
| Acceptable Concentration | | ppm | 357 | 899 | 400 | 400 | 400 |

EP 3 626 798 A1

As shown in Tables 6 to 10, the compositions of the Examples were found to have an OEL of 400 ppm or more.

## Claims

1. A composition comprising a refrigerant,
the refrigerant comprising

difluoromethane (R32),
2,3,3,3-tetrafluoropropene (R1234yf), and trans-1,3,3,3-tetrafluoropropene (R1234ze(E)),

wherein the three components have a mass ratio that falls within a region surrounded by lines a, b, c, d, and e that connect the following 5 points of a ternary composition diagram that has the three components as vertices of Fig. 1:

point A (R32/R1234yf/R1234ze(E)=59.0/41.0/0.0 mass%);
point B (R32/R1234yf/R1234ze(E)=58.9/0.0/41.1 mass%);
point G (R32/R1234yf/R1234ze(E)=41.5/0.0/58.5 mass%);
point H (R32/R1234yf/R1234ze,E)=30.1/49.6/20.3 mass%); and
point E (R32/R1234yf/R1234ze(E)-43.2/56.8/0 mass%), and

wherein line c is an approximate curve that connects the following points:

point G (R32/R1234yf/R1234ze(E)=41.5/0.0/58.5 mass%);
point $GH_{yf=10}$ (R32/R1234yf/R1234ze(E)-38.6/10.0/51.4 mass%);
point $GH_{yf=20}$ (R32/R1234yf/R1234ze(E)=36.0/20.0/44.0 mass%);
point $GH_{yf=30}$ (R32/R1234yf/P1234ze(E)=33.6/30.0/36.4 mass%);
point $GH_{yf=40}$ (R32/R1234yf/R1234ze(E)=31.7/40.0/28.3 mass%); and
point H (R32/R1234yf/R1234ze(E)=30.1/49.6/20.3 mass%).

2. A composition comprising a refrigerant,
the refrigerant comprising R32, R1234yf, and R1234ze(E),
wherein the three components have a mass ratio that falls within a region surrounded by lines a, b, f, d, and e that connect the following 5 points of a ternary composition diagram that has the three components as vertices of Fig. 2:

point A (R32/R1234yf/R1234ze(E)=59.0/41.0/0.0 mass%);
point B (R32/R1234yf/R1234ze(E)=58.9/0.0/41.1 mass%);
point I (R32/R1234yf/R1234ze(E)=51.9/0.0/48.1 mass%);
point J (R32/R1234yf/R1234ze(E)=38.5/54.2/7.3 mass%); and
point E (R32/R1234yf/R1234ze(E)=43.2/56.8/0.0 mass%), and

wherein line f is an approximate curve that connects the following points:

point I (R32/R1234yf/R1234ze(E)=51.9/0/48.1 mass%);
point $IJ_{yf=10}$ (R32/Ri234yf/RI234zeiE)=48.5/10.0/41.5 mass%);
point $IJ_{yf=20}$ (R32/R1234yf/R1234ze(E)=45.5/20.0/34.5 mass%);
point $IJ_{yf=30}$ (R32/R1234yf/R1234ze(E)=42.9/30.0/27.1 mass%);
point $IJ_{yf=40}$ (R32/R1234yf/R1234ze(E)=40.7/40.0/19.3 mass%);
point $IJ_{yf=50}$ (R32/R1234yf/R1234ze(E)=39.0/50.0/11.0 mass%); and
point J (R32/R1234yf/R1234ze(E)=38.5/54.2/7.3 mass%).

3. A composition comprising a refrigerant,
the refrigerant comprising R32, R1234yf, and R1234ze(E),
wherein the three components have a mass ratio that falls within a region surrounded by lines c, d, and g that connect the following 3 points of a ternary composition diagram that has the three components as vertices of Fig. 3:

point S (R32/R1234yf/R1234ze(E)=38.0/12.1/49.9 mass%);
point T (R32/R1234yf/R1234ze(E)=38.1/54.0/7.9 mass%); and
point H (R32/R1234yf/R1234ze(E)=30.1/49.6/20.3 mass%), and

wherein line c is an approximate curve that connects the following points:

point G (R32/R1234yf/R1234ze(E)=41.5/0.0/58.5 mass%);
point $GH_{yf=10}$ (R32/R1234yf/R1234ze(E)=38.6/10.0/51.4 mass%);
point $GH_{yt=20}$ (R32/R1234yf/R1234ze(E)=36.0/20.0/44.0 mass%);
point $GH_{yf=30}$ (R32/R1234yf/R1234ze(E)=33.6/30.0/36.4 mass%);
point $GH_{yf=40}$ (R32/R1234yf/R1234ze(E)=31.7/40.0/28.3 mass%); and
point H (R32/R1234yf/R1234ze(E)=30.1/49.6/20.3 mass%).

4. The composition according to any one of claims 1 to 3, wherein the refrigerant comprises R32, R1234yf, and R1234ze(E) in a total amount of 99.5 mass% or more of the entire refrigerant.

5. A composition comprising a refrigerant,
the refrigerant comprising 1,1,1,2-tetrafluoroethane (R134a), R1234yf, and R1234ze(E),
wherein the three components have a mass ratio that falls within a region surrounded by lines h, i, and j that connect the following 3 points of a ternary composition diagram that has the three components as vertices of Fig. 4:

point S' (R134a/R1234yf/R1234ze(E)=52.2/18.4/29-4 mass%);
point T' (R134a/R1234yf/R1234ze(E)=52.3/39.2/8.6 mass%); and
point H' (R134a/R1234yf/R1234ze(E)=36.9/37.5/25.6 mass%), and

wherein line i is an approximate curve that connects the following points:

point I' (R134a/R1234yf/R1234ze(E)=71.5/0.0/28.5 mass%);
point $I'H'_{yf=10}$ (R134a/R1234yf/R1234ze(E)=60.3/10.0/29.7 mass%);
point $I'H'_{yf=20}$ (R134a/R1234yf/R1234ze(E)-50.7/20.0/29.3 mass%);
point $I'H'_{yf=30}$ (R134a/R1234yf/R1234ze(E)=42.4/30.0/27.6 mass%);
point $I'H'_{yf=40}$ (R134a/R1234yf/R1234ze(E)=35.4/40.0/24.6 mass%); and
point H' (R134a/R1234yf/R1234ze(E)=36.9/37.5/25.6 mass%).

6. The composition according to claim 5, wherein the refrigerant comprises R134a, R1234yf, and R1234ze(E) in a total amount of 99.5 mass% or more of the entire refrigerant.

7. The composition according to any one of claims 1 to 6, which is for use as a refrigerant.

8. The composition according to claim 7, which is for use as a refrigerant for a refrigerating machine.

9. The composition according to claim 8, wherein the refrigerating machine is a refrigerator, a freezer, a water cooler, an ice maker, a refrigerating showcase, a freezing showcase, a freezing and refrigerating unit, a refrigerating machine for freezing and refrigerating warehouses, a chiller (chilling unit), a turbo refrigerator, or a screw refrigerator.

10. The composition according to any one of claims 1 to 9, which is for use as an alternative refrigerant for R404A.

11. The composition according to any one of claims 1 to 9, which is for use as an alternative refrigerant for R134a.

12. Use of the composition of any one of claims 1 to 6 as a refrigerant.

13. A refrigeration method comprising operating a refrigeration cycle using the composition of any one of claims 1 to 6.

14. A refrigerating machine comprising the composition of any one of claims 1 to 6.

Fig.1

Fig.2

Fig.3

Fig.4

Fig.5

Fig.6

## INTERNATIONAL SEARCH REPORT

| International application No. |
| --- |
| PCT/JP2018/018819 |

**A. CLASSIFICATION OF SUBJECT MATTER**
Int.Cl. C09K5/04(2006.01)i

According to International Patent Classification (IPC) or to both national classification and IPC

**B. FIELDS SEARCHED**

Minimum documentation searched (classification system followed by classification symbols)
Int.Cl. C09K5/04

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2013-542312 A (HONEYWELL INTERNATIONAL INC.) 21 | 1, 4, 7–14 |
| A | November 2013, claims 1-10, paragraphs [0023], | 2-3, 5-6 |
| | [0045] & US 2012/0119136 A1, claims 1-17, | |
| | paragraphs [0029], [0054] & WO 2012/065026 A2 & EP | |
| | 2638124 A1 & CA 2817726 A1 & CN 103282461 A & MX | |
| | 2013005230 A & KR 10-2013-0102617 A & RU | |
| | 2015108379 A & BR 112015003635 A | |

☒ Further documents are listed in the continuation of Box C.   ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09 August 2018 (09.08.2018) | 21 August 2018 (21.08.02018) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

EP 3 626 798 A1

**INTERNATIONAL SEARCH REPORT**

International application No.

PCT/JP2018/018819

C (Continuation). DOCUMENTS CONSIDERED TO BE RELEVANT

| Category* | Citation of document, with indication, where appropriate, of the relevant passages | Relevant to claim No. |
|---|---|---|
| X<br>A | WO 2014/031962 A1 (E. I. DU PONT DE NEMOURS AND COMPANY) 27 February 2014, claims 1-20, example 5, fig. 1 & EP 2888334 A1 & TW 201412965 A | 1, 4, 7-14<br>2-3, 5-6 |
| X<br>A | JP 2017-36452 A (HONEYWELL INTERNATIONAL INC.) 16 February 2017, claims 1-24, examples 13-15 & US 2010/0044619 A1, claims 1-24, examples 13-15 & WO 2009/009413 A2 & EP 2149592 A2 & CA 2674256 A1 & CN 101665681 A & KR 10-2010-0013288 A & MX 2009008204 A & AU 2013203627 A | 1-2, 4, 7-14<br>3, 5-6 |
| X<br>A | JP 2015-521668 A (E. I. DU PONT DE NEMOURS AND COMPANY) 30 July 2015, claims 1-17, examples 2-3 & US 2015/0184048 A1, claims 1-17, examples 2-3 & WO 2013/192075 A1 & EP 2861689 A1 & AU 2013277407 A & MX 2014015184 A & BR 112014031783 A | 5-14<br>1-4 |
| A | JP 2015-527466 A (E. I. DU PONT DE NEMOURS AND COMPANY) 17 September 2015, claims 1-20 & US 2015/0225632 A1, claims 1-20 & WO 2014/031949 A1 & EP 2888333 A1 & TW 201410856 A & CN 104583355 A | 1-14 |
| A | JP 2015-131966 A (HONEYWELL INTERNATIONAL INC.) 23 July 2015, claims 1-10 & US 2011/0023507 A1, claims 1-27 & WO 2009/009413 A2 & EP 2566930 A1 & AU 2011248123 A & CA 2798620 A1 & CN 102971394 A & MX 2012012886 A & KR 10-2013-0103338 A | 1-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09324175 A
- US 20100019190 A1
- WO 2010059677 A2
- JP 2013529703 A
- JP 2007535611 A